# EUROPEAN PATENT SPECIFICATION

(11) **EP 2 177 340 B1**
(45) Date of publication and mention of the grant of the patent: **07.09.2011**
(21) Application number: 08290943.3
(22) Date of filing: 07.10.2008
(51) Int. Cl.: B29C 45/44, B29C 33/52

(54) **Lost core processs for producing hollow articles**
Schmelzkern-Verfahren zur Herstellung von hohlen Artikeln
Procédé de noyau perdu pour la production d'articles creux

(43) Date of publication of application: 21.04.2010
(73) Proprietor: E.I. DUPONT DE NEMOURS AND COMPANY, Wilmington DE 19898 (US)
(72) Inventor: Doy, Guillaume, 39220 Premanon (FR); Leboeuf, Philippe, 94410 Saint Maurice (FR); Palicka, Miroslav, 75121 Prosenice Poerov (CZ)
(74) Representative: Heinemann, Monica

(56) References cited:
- EP-A- 1 255 071
- WO-A-01/07227
- GB-A- 632 972
- US-A- 4 590 026

## Description

### Field of Invention

The present invention relates to the field of manufacturing hollow articles using a lost core process, in particular it relates to polymeric muffler applications.

### Background of the Invention

Hollow bodies have a multitude of uses in industry and consumer products. For example, they are often used for air conduction in vehicles, such as in intake manifolds, intake manifold modules, ducts and connection pipes, filtering tubes, muffler resonators and the like. These bodies can be made of thermoplastic material, in which they are formed either through blow molding techniques, lost core techniques or injection molding techniques.

Conventional lost core-molding processes include several steps including the shaping of a solid core to a required shape that defines the inner contour of the final completed part. The core is formed by filling the inner cavity of a mold with a meltable material that can be chosen among an alloy having a low melting temperature, ice, wax or gel, and rendering the material solid. The shaped core is then ejected from the core mold and transferred to a molding station, where it is molded over by a thermoplastic or thermoset material to form the desired shape of the plastic article so as to form an overmolded assembly.

The overmolded assembly is then ejected from the molding station and moved to the core melting station where the solid core is melted at a temperature above its melting point but below the melting point of the overmoulded material thus allowing the core material to melt and to be drained from the overmolded assembly leaving the final completed part.

As described in Plastics World (Sept. 1991) 49, (10), p. 29, water is a cheap raw material to prepare a solid core formed from ice, however, there are several inherent problems associated with ice cores. Under the influence of gas, such as oxygen, which may be dissolved in the water, cracks may appear on the surface of the ice core thus leading to a poor final internal surface appearance of the molded body. Moreover, it is difficult to remove the shaped ice core from its mold before its transfer to the molding station because of volume expansion during the freezing step. Moreover, the cycle time required to manufacture a hollow part by using the lost core technology with water/ice is long due to the long freezing and melting times needed to prepare the solid core. In addition, the molar heat of fusion of water is relatively high, meaning a significant energy expenditure is necessary to melt the core.

GB 632 972 A describes cores suitable for making moulded articles and a process of manufacturing such articles, wherein the cores may be made from a mixture containing equal parts by weight of sodium carbonate, sodium nitrate and potassium carbonate, from sodium acetate, or from mixtures of sodium acetate with other metal acetates. Moreover, the manufacturing of a polymeric muffler housing being a single piece is known from EP-A-1 255 071.

A need remains for a lost core method for making hollow bodies.

### SUMMARY OF INVENTION

It has been found that the above mentioned problems can be overcome by a method for producing a hollow article having an inner cavity, which method comprises the steps of:
(a) providing a meltable solid core being made of a core material and having the desired size and shape of the inner cavity of the hollow article;
(b) enveloping the meltable core with a molten material, which molten material is solid at room temperature;
(c) allowing the molten material to solidify;
(d) liquefying the meltable solid core to have a core material which is in a liquid state; and
(e) removing the core material;
wherein the meltable solid core is a solidified aqueous solution of sodium acetate at a concentration between 4 to 60 molal.

In a second aspect, the invention provides a method for producing a muffler housing, using the method of the invention.

### DETAILED DESCRIPTION OF INVENTION

As used throughout the specification, the phrases "about" and "at or about" are intended to mean that the amount or value in question may be the value designated or some other value about the same. The phrase is intended to convey that similar values promote equivalent results or effects according to the invention.

A hollow article is characterized by having an inner cavity with a size and a shape that is designed according to the end-use application.

By molal, it is meant moles of sodium acetate per kg of solvent, i.e. moles of sodium acetate per 1kg of water.

The method for producing a hollow article according to the present invention first comprises a step of providing a meltable solid core. The meltable solid core is characterized by having the size and the shape of the inner cavity of the hollow article. The meltable solid core is made of a core material which is an aqueous solution of sodium acetate at a concentration between at or about 4 to at or about 60 molal, preferably between at or about 20 to at or about 50 molal and more preferably between at or about 40 to at or about 45 molal.

The aqueous solution of sodium acetate is solidified so that to form and provide a meltable solid core. The size and the shape of the meltable solid core may be achieved by any methods known in the art such as for example carving, cutting or using a mold. Preferably, the size and the shape of the meltable solid core are achieved by using a mold having a cavity that defines the inner contours of the hollow article. If a mould is used to provide a specific design of the meltable solid core, such a mold may be made of any material that withstands at a temperature at or about 100°C or higher. Examples of materials that can be used to manufacture such a mold include without limitation thermoplastics, thermosets or metals.

The meltable solid core is preferably obtained by placing the aqueous solution of sodium acetate which is in a liquid state in the mold of desire dimension, i.e. a mold having a cavity that defines the inner contours of the hollow article, and solidifying the aqueous solution of sodium acetate.

Placing the aqueous solution of sodium acetate in the mold may be done by pouring, casting or by injection such as for example low pressure injection. Preferably, the aqueous solution of sodium acetate is placed or filled in the mold by casting; casting may be done at a temperature between 60°C and 100°C, preferably between 80°C and 100°C and may be one under atmospheric pressure, under low pressure, i.e. at a pressure at or under 5 bars, or under vacuum.

Solidification of the aqueous solution of sodium acetate may be done by adding a seed such as for example a dust speck or a crystal of sodium acetate to the solution, by adding a metallic strip which is bent so that a white cloud of crystals begins to precipitate or may be self-initiated by the presence of a material, a device and/or a structure as described hereafter. As soon as a seed is added to the aqueous solution of sodium acetate, a nucleation center is formed and, within few seconds, the entire volume is filled up with a solid crystalline of sodium acetate.

According to another embodiment of the invention and with the aim of adding any functionality to the hollow article, a material, a device and/or a structure may be enclosed in the inner cavity of the hollow article. Added functionalities can be of several types including without limitation noise dampening, vibration dampening, acoustic treatment, chemical treatment, medium depollution, temperature management or any types of systems used to filter, measure or analyze the environment. For this reason, a material, a device and/or a structure may be provided within the meltable solid core by placing the device and/or a structure in the mold prior to adding the liquid aqueous solution of sodium acetate. The material, device and/or structure may be randomly distributed within the meltable solid core and will be randomly distributed within the cavity of the hollow article or may be fixed on specific areas of the hollow article by means of a support. Examples of material, device and/or a structure include without limitation coal, carbon, natural fibers, glass fibers, foams, metallic foams, grids, any internal construction in plastic, metal or ceramic, or any kind of sensors, detectors or injectors systems made in any materials like metals, plastics or ceramics. In addition of providing any functionality to the hollow article and as mentioned above, the presence of the material, device and/or structure such as for example glass fibers initiates the solidification of the aqueous solution of sodium acetate.

According to another embodiment of the invention, the meltable solid core may be provided with at least one insert. The presence of at least one insert is achieved by positioning it within the mold so as it extends to the exterior of the mold and so as it will protrude from the meltable solid core on at least one side. The at least one insert is held within the mold in a predetermined position and the liquid aqueous solution of sodium acetate is added. The at least one insert allows not only the meltable solid core to be positioned in a desired position in the mold used to prepare the meltable solid core and in the mold wherein a molten material is used to envelop the meltable solid core but it also allows an easier handling of the meltable solid core. Depending on the end-use application, the final hollow article may comprise or not the at least one insert. Once the meltable core is removed from the enveloped article thus leading to the final completed hollow article, the at least one insert may be removed or may be an integral component of the hollow article. The at least one insert may be made of any material such as for example ceramic, thermoplastic, thermosets or metal. Preferably, the at least one insert comprise porosities or holes to provide a means for the liquefied core material to be drained out of the system.

The meltable solid core may be stored either at room temperature or at a temperature below 25°C or may be directly uses for the next step of the method according to the present invention.

The method for producing a hollow article according to the present invention further comprises a step of enveloping the meltable solid core with a molten material. The molten material can be any material that is solid at room temperature and it will be chosen according to the end-use application. The molten material is preferably selected from a metal, a ceramic, a rubber, a thermoplastic, a thermoplastic elastomer and a mixture thereof. Examples of rubbers are fluororubbers, polyacrylates, silicones, fluoro-silicones, nitrile butadiene rubber, hydrogenated nitrile butadiene rubber, epichlorohydrin rubber or ethylene propylene diene rubber. Examples of thermoplastics are polyamides, polyphthalamides, polyesters, thermotropic liquid crystalline polymers polyacetals and polyolefins. Examples of thermoplastic elastomers are thermoplastic polyolefinic elastomers (TPO), styrenic thermoplastic elastomers (TPS), thermoplastic polyether or polyester polyurethanes (TPU), thermoplastic vulcanizates (TPV), thermoplastic polyamide block copolymers (TPA), copolyester thermoplastic elastomers (TPC) and mixtures thereof. Preferably, the molten material is selected from thermoplastics and rubbers and more preferably from thermoplastics.

Enveloping may be made by a coating process or by a molding process. Examples of coating processes include without limitation dipping methods, casting methods, curtain coating methods and spray coating methods, such methods can be used alone or in combination. Preferably, the enveloping step is achieved by a molding process such as for example injection moulding, blow molding or rotational molding, injection molding being preferred. When the enveloping step is preferably achieved by a molding process and when the meltable solid core was previously shaped in a mold, the meltable solid core is first unmolded and is then positioned in a molding station to be enveloped with the molten material. Should the unmolding step be too difficult, unmolding may be rendered easier by slightly heating up the mold so as to slightly melt the surface of the meltable solid core. The molding station comprises a mold having a cavity defining the outer surface configuration of the hollow article. After having positioned the meltable solid core in the molding station, the molten material is then introduced in the molding station and the meltable solid core is enveloped by the molten material. When the at least one insert is added to the meltable solid core, it may be preferred to inject the molten material onto the at least one insert instead of injecting it to the meltable solid core directly.

The method for producing a hollow article according to the present invention further comprises a step of allowing the molten material used to envelop the meltable solid core to solidify so as to form an enveloped meltable solid core. According to the end-use application and to the nature of the molten material, solidification may be done by crystallization, reduction of the temperature or by vulcanization and post-curing.

The method for producing a hollow article according to the present invention further comprises a step of liquefying the meltable solid core to have a core material which is in a liquid state. Liquefying the meltable solid core may be done by melting or by dissolving it with a solvent such as for example water. When the enveloped meltable solid core is liquefied by melting, this step may be done by storing the core in an environment having a temperature between 60°C and 120°C, preferably between 80°C and 100°C; the environment may be air or a liquid bath.

The method for producing a hollow article according to the present invention further comprises a step of removing the core material. Removing of the core material is done by draining out the liquefied material through an aperture in the system. Such an aperture may be made on the surface of the hollow article or it may be already present during the process such as for example by using one or more inserts which is either porous or that comprises perforations. The liquefying of the meltable solid core and the removing of the core material lead to a hollow article.

The method for producing a hollow article according to the present invention may further comprise a step of washing the inner cavity of the hollow article such as for example by passing a liquid or water within the cavity of the article.

The hollow article may be further treated as desired by way of an outer cosmetic finishing or functional finishing such as for example by adding braidings, reinforcement layers, thermal shields or softer cover layers. Examples of braidings may be filament braidings with polyamide, aramid, polyethylene terephthalate (PET) or metallic filaments and woven fabrics of these materials. Examples of thermal shields may be metallic foils such as aluminum foils. Examples of softer cover layers may be layers made of rubber or of a thermoplastic elastomer.

Examples of hollow articles that can be produced by the lost core method according to the present invention include without limitation a duct, an air intake manifold, a filter, a resonator, a mixing device or a muffler housing.

The present invention is particularly useful for manufacturing a polymeric muffler housing and the process used for producing a polymeric muffler housing is an illustrative example of the process of the present invention. A muffler housing forms a substantially closed compartment in which noise and vibration are dampened.. By "polymeric muffler housing", it is meant a muffler having a housing made of a polymeric material, which may be any kind of polymer, including a thermoplastic, thermoset, or an infusible polymer, i.e. polymer which is not crosslinked but does not become liquid before it reaches it decomposition temperature.

Mufflers (also called silencers) are used as part of the exhaust systems of internal combustion and other types of engines, principally to reduce the noise exiting the engine with the exhaust gases (except perhaps in jet and rocket engines). Typical types of uses for these muffler systems are on automobiles, trucks, snowmobiles, motorcycles, boats, scooters, railroad engines, electrical generators, golf carts, tractors and other motorized agricultural equipment, lawn mowers and other power landscaping equipment, etc. Virtually any use for an internal combustion engine usually also includes a muffler (system). Because of the high temperatures of the exhaust gases, and the corrosive nature of those gases, metals, particularly steel, have traditionally been used for mufflers. There is a current and general desire in the automotive field to replace metallic structures by lighter ones made of thermoplastic polymers. More recently it has been proposed to use mufflers in which the muffler housing is a polymer with good high temperature resistance, see for instance U.S. Patents 5,321,214, 5,340,952 and 5,052,513, 6,543,577 and European Patent 446,064.

The method for producing a polymeric muffler housing according to the present invention first comprises a step of providing a meltable solid core. The shape and the size of the meltable solid are achieved by using a first mold having a cavity defining the inner contours of the polymeric muffler housing. The meltable solid core is made of a core material which is an aqueous solution of sodium acetate at a concentration between at or about 4 to at or about 60 molal, preferably between at or about 20 to at or about 50 molal and more preferably between at or about 40 to at or about 45 molal.

When a polymeric muffler housing is manufactured according to method of the present invention, the at least one insert is not only used for positioning and fixing the meltable core within the molding station but it is preferably an integral and functional component of the final hollow article, e.g. a muffler. The at least one insert used for manufacturing the muffler housing preferably consists of an exhaust pipe. The integration of the exhaust pipe is done by positioning the pipe within the hollow space in which the polymeric muffler housing is to be created inside the first mold so that the exhaust pipe protrudes from the polymeric muffler housing and may be partially enveloped with the molten material. The exhaust pipe may have a plurality of holes so as the liquefied core will be later drained out of the system. In addition to provide a way for removing the liquefied core, an exhaust pipe comprising holes improves the sound deadening characteristics of the muffler. Several known polymeric mufflers have one or both of these features; see for instance U.S. Patents 5,340,952, 6,543,577 and European Patent Application 446,064, all of which are hereby included by reference.

The muffle described herein, has an "insulating gap" between the exhaust pipe and the polymeric muffler housing which is a substantially closed compartment. By an "insulating gap" is meant a volume filled with air and optionally other materials. As mentioned above, during the manufacture of the polymeric muffler housing, functionalities, i.e. a material, a device and/or a structure, may be introduced within the cavity of the hollow body, i.e. within the insulating gap. Added functionalities can be of several types including without limitation noise dampening, vibration dampening, acoustic treatment, chemical treatment, medium depollution, temperature management or any types of systems used to filter, measure or analyze the environment. Preferably, the cavity of the polymeric muffler housing is partly or fully filled with an insulating material such as foam, glass fibers, glass mesh, rock wool or other ceramic fibers. Not only do these components often assist in deadening the sound, they may also act to improve the thermal isolation of the muffler housing from the heat from the exhaust pipe, so it is preferred that these insulating materials be present.

Before producing the meltable solid core by placing the aqueous solution of sodium acetate which is in a liquid state in the first mold by for example pouring, casting or by injection, bushings may be introduced. Bushings hold the muffler housing in position relative to the exhaust pipe. By forming an interface between the exhaust pipe and the muffler housing, the addition of bushings protects the housing to be directly attached to the outer surface of the exhaust pipe, which would often result in melting and/or degradation of the polymer. Since the bushings are typically in contact with the exhaust pipe they should be made of a material which resists high temperatures, such as a high temperature thermoplastic, metal or ceramic. Preferably, the bushings are made of a high temperature thermoplastic and more preferably from a fluoropolymer and still more preferably from polytetrafluoroethylene (PTFE).

The method for producing a polymeric muffler housing according to the present invention further comprises a step of filling the first mold with the aqueous solution of sodium acetate and solidifying the solution to form a meltable solid core. The mold contains the exhaust pipe correctly positioned and optionally functionalities, i.e. a material, a device and/or a structure. On solidification, the exhaust pipe and the functionalities are embedded in the meltable solid core.

After having provided meltable solid core, the method for producing a polymeric muffler housing according to the present invention further comprises a step of unmolding the meltable solid core.

After having unmolded the meltable solid core, it may be stored at room temperature or at a temperature below 25°C or it is directly positioned in a molding station comprising a second mold having a cavity defining the outer surface configuration of the polymeric muffler housing so that the meltable solid core is then enveloped with a molten material. Preferably, the enveloping step used to produce a polymeric muffler housing is done by a molding process such as for example injection moulding, blow molding or rotational molding, injection molding being preferred. As already mentioned, when the at least one insert is added to the meltable solid core and/or bushings are added, it may be preferred to inject the molten material onto the at least one insert and/or on the bushings instead of injecting it to the meltable solid core directly.

The polymer used for enveloping the meltable solid core should be temperature resistant enough to withstand temperatures that it may be heated to. Usually the hottest part of this section of the exhaust system will be the exhaust pipe at the first mounting adapter and the polymer there should be able to withstand temperatures generated when the exhaust pipe is hot. Engine and automotive vehicle manufacturers generally have specifications or standards for any particular engine and exhaust system configuration in which the temperature of the exhaust pipe at the muffler inlet portion will be known or specified. Mufflers with polymeric housings are known. Useful materials for these polymeric housing include thermoplastics such as for example polyamides, thermotropic liquid crystalline polymers, higher melting polyesters, poly(arylene sulfides), polyketones, poly(etherketones), poly(etheretherketones), rubbers such as fluororubbers, polyacrylates, silicones, fluoro-silicones, nitrile butadiene rubber, hydrogenated nitrile butadiene rubber, epichlorohydrin rubber or ethylene propylene diene rubber, thermosetting resins such as epoxy, melamine and phenolic (thermosetting) resins, and infusible polymers such as polyimides, poly(p-phenylenes), and polymers composed mostly or all of repeat groups of the formula 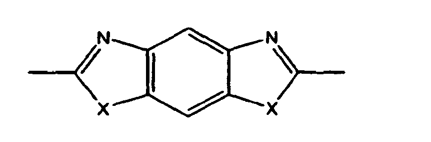 and 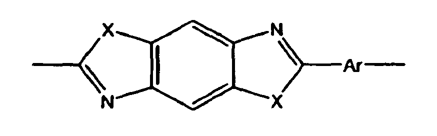 wherein X is NH, N-Phenyl, O (oxygen) or S (sulfur), and Ar is p-phenylene, 4,4'-biphenylene or 1,4-naphthylylene. These housing, as is well known, must be capable of withstanding higher temperatures to which they may be exposed, for example by direct contact with exhaust gases and/or being heated by thermal conduction.

Preferably, the molten polymeric material used for enveloping the meltable solid core is selected from thermoplastics and rubbers, more preferably from thermoplastics. Preferably, the one or more thermoplastics are selected from polyamides (nylons) such as for example fully aliphatic polyamides and semiaromatic polyamides; polyesters such as for example poly(ethylene terephthalate) (PET), poly(trimethylene terephthalate) (PTT), poly(1,4-butylene terephthalate) (PBT), poly(ethylene 2,6-naphthoate) (PEN), and poly(1,4-cyclohexyldimethylene terephthalate) (PCT); and mixtures thereof; more preferably, the one or more thermoplastics are selected from polyamides and still more preferably from semiaromatic polyamides. Semiaromatic polyamides are homopolymers, copolymers, terpolymers, or higher polymers that are derived from monomers containing aromatic groups. Useful semiaromatic polyamides include copolyamides of 1,6-hexanediamine, terephthalic and/or isophthalic acids, and optionally adipic acid, and polyamides derived in whole or part from one or more of the following monomers, H₂N(CH₂)ₘNH₂ wherein m is 4 to 14, HO₂C(CH₂)_{y}CO₂H wherein y is two to 14, 2-methyl-1,5-pentanendiamine, isophthalic acid, terephthalic acid, 1,3-diaminobenzene, 1,4-diaminobenzene, and 4,4'-bibenzoic acid.

As described above, the method for producing a polymeric muffler housing according to the present invention further comprises a step of allowing the molten material used to envelop the meltable solid core to solidify so as to form an enveloped meltable solid core, a step of liquefying the meltable solid core, a step of removing the core material and optionally a step of washing the inner cavity of the polymeric muffler housing.

The liquefying of the meltable solid core and the removing of the core material lead to a polymeric muffler housing.

Further described herein is a polymeric muffler housing. As mentioned above, the polymeric muffler housing is preferably made of a thermoplastics such as for example polyamides, thermotropic liquid crystalline polymers, higher melting polyesters, poly(arylene sulfides), polyketones, poly(etherketones), poly(etheretherketones), rubbers such as fluororubbers, polyacrylates, silicones, fluoro-silicones, nitrile butadiene rubber, hydrogenated nitrile butadiene rubber, epichlorohydrin rubber or ethylene propylene diene rubber, thermosetting resins such as epoxy, melamine and phenolic (thermosetting) resins, and infusible polymers such as polyimides, poly(p-phenylenes). The polymeric muffler housing is a single piece and/or has no welding, adhesive or mechanical seams.

The use of a meltable solid core made of an aqueous solution of sodium acetate leads to a time and cost effective manufacture of hollow articles made by a lost core method in comparison with meltable solid core made of water/ice. The cycle time required to manufacture a hollow article is considerably reduced since solidification and melting times needed to prepare the solid core are significantly shorter. The overall cost of the manufacturing process is reduced since less energy is required to melt the meltable solid core, i.e. ice melt around 0°C and absorb much more heat than an aqueous solution of sodium acetate which melt at a temperature above 50°C. Less defects and waste are obtained during the production of the meltable solid core since no cracks appear on the surface of the core and no volume expansion are observed, which lead to an easier unmolding step.

Polymeric muffler housings produced according to the present invention are done in a single shot process whereas polymeric muffler housings are conventionally manufactured by assembling a pair of housing halves coupled with each other at their flange portions. The pair of housing halves is generally assembled by mechanical means such as for example riveting or screwing the parts together, or by an adhesive method such as for example gluing the parts together or by welding, such assembling may lead to weak adhesion points (seams) which is highly unfavorable to the integrity of the polymeric muffler housing. The method of the present invention does not require such an additional assembling step thus leading not only to an increase of the production yield but also to a polymeric muffler housing that is a single piece and/or has no welding, adhesive or mechanical seams. Accordingly, polymeric muffler housings produced according to the present invention are much more robust than the polymeric muffler housing made according to the prior art.

Furthermore, described herein is a muffler comprising a polymeric muffler housing as described above, an exhaust pipe and bushings.

The following example is provided to describe the invention in further detail. This example, which sets forth a preferred mode presently contemplated for carrying out the invention, is intended to illustrate and not to limit the invention.

### EXAMPLE

The following procedure was used to prepare a muffler comprising a polymeric muffler housing having a diameter of 80 mm and a length of 180 mm :

An aqueous solution of sodium acetate at a concentration of 44 molal (900 g sodium acetate trihydrate in 150 mL of water) was prepared by dissolving sodium acetate trihydrate in water at 95°C.

An exhaust pipe made of steel was used as an insert and bushings were provided on the exhaust pipe. The exhaust pipe had perforations having a diameter of about 5 mm. The exhaust pipe assembly was positioned in a mold. The mold was filed with a glass mesh and fabric around the exhaust pipe (300 grams) acting as functionalities. The mold was closed and rotated in a vertical position. A plug was positioned in the exhaust pipe at a bottom position so that the aqueous solution of sodium acetate does not flow out of the mold. The aqueous solution of sodium acetate was poured at about 95°C in the mold and the assembly was allowed to cool to room temperature thus leading to the solidification of the aqueous solution of sodium acetate so as to form a meltable solid core.

The closed mold was locally heated with a flame and the meltable solid core was removed from it and stored either at room temperature or at 4°C in a fridge.

An injection molding station was heated up to about 200°C and the meltable solid core was transferred to the mold of the injection molding station. The mold was closed around the meltable solid core. Injection molding of poly(1,4-butylene terephthalate) (PBT) was done at 270°C starting at a speed of 60 mm/s and then at a speed of 156 mm/s. Molding cycle time was about 30 seconds.

The so-obtained PBT enveloped meltable solid core was removed from the injection molding station. The enveloped meltable solid core was liquefied in an oven and then put in hot water.

## Claims

1. A method for producing a hollow article having an inner cavity, comprising the steps of:
(a) providing a meltable solid core being made of a core material and having the desired size and shape of the inner cavity of the hollow article;
(b) enveloping the meltable solid core with a molten material, which molten material is solid at room temperature;
(c) allowing the molten material to solidify;
(d) liquefying the meltable solid core to have a core material which is in a liquid state; and
(e) removing the core material
wherein the meltable solid core is a solidified queous solution of sodium acetate at a concentration between 4 to 60 molal.

2. The method according to claim 1, wherein step (a) is carried out by placing a liquid aqueous solution of sodium acetate at a concentration between 4 to 60 molal in a mould of desire dimension; and solidifying the solution.

3. The method according to claim 1 or 2, wherein the molten material is selected from a metal, a ceramic, a rubber, a thermoplastic and a mixture thereof.

4. The method according to claim 3, wherein the molten material is selected from thermoplastics and rubbers.

5. The method according to claim 4, wherein the molten material is selected from thermoplastics.

6. The method according to any preceding claim, wherein step (b) is carried out by injection molding.

7. The method according to any preceding claim, comprising a further step, before step (a), of:
providing within the meltable solid core material, a device and/or structure that is it desired to be enclosed in the cavity of the hollow article.

8. The method according to any preceding claim, wherein the meltable solid core is provided with one or more inserts allowing the core to be positioned in a desired position in a mould.

9. The method according to any preceding claim, wherein step (d) is carried out by melting the meltable solid core.

10. The method according anyone of claim 1 to 8, wherein step (d) is carried out by dissolving the meltable solid core with a solvent.

11. The method according to any preceding claim, wherein the hollow article is a duct, an air intake manifold, a filter, a resonator, a mixing device or a muffler housing.

12. The method according to claim 1, wherein the hollow article is a polymeric muffler housing and wherein the method comprises the steps:
(i) providing a first mold having a cavity defining the inner contours of the polymeric muffler housing;
(ii) providing an insert and positioning it in the first mold so as it extends to the exterior of the first mold;
(iii) filling the first mold with an aqueous solution of sodium having a concentration between 4 to 60 molal; and solidifying the aqueous solution to form a meltable solid core;
(iv) unmolding the meltable solid core;
(v) providing a second mold having a mold cavity defining the outer surface configuration of the polymeric muffler housing;
(vi) positioning the meltable core in the second mold;
(vii) enveloping the meltable solid core with a molten polymeric material to form the polymeric muffler housing;
(viii) ejecting the polymeric muffler housing;
(ix) liquefying the meltable solid core to have a core material which is in a liquid state; and
(x) removing the meltable core.

13. The method according to claim 12, wherein the insert used in step (ii) is an exhaust pipe.

14. The method according to claim 12 or 13, wherein the insert used in step (ii) is an exhaust pipe and which method comprises a further step, before step (iii), of providing bushings on the exhaust pipe.

15. The method according to anyone of claims 12 to 14, wherein the molten polymeric material is selected from thermoplastics and rubbers.

16. The method according to claim 15, wherein the molten polymeric material is selected from thermoplastics.

## Patentansprüche

1. Verfahren zum Herstellen eines hohlen Artikels, der einen inneren Hohlraum hat, wobei das Verfahren die folgenden Schritte umfasst:
(a) das Bereitstellen eines schmelzbaren festen Kerns, der aus einem Kernwerkstoff hergestellt ist und die gewünschte Größe und Gestalt des inneren Hohlraums des hohlen Artikels hat,
(b) das Umhüllen des schmelzbaren festen Kerns mit einem geschmolzenen Werkstoff, wobei der geschmolzene Werkstoff bei Raumtemperatur fest ist,
(c) das Ermöglichen, dass der geschmolzene Werkstoff festwird,
(d) das Verflüssigen des schmelzbaren festen Kerns, um einen Kernwerkstoff zu haben, der sich in einem flüssigen Zustand befindet, und
(e) das Entfernen des Kernwerkstoffs,
wobei der schmelzbare feste Kern eine festgewordene wässrige Lösung von Natriumacetat bei einer Konzentration zwischen 4 und 60 molal ist.

2. Verfahren nach Anspruch 1, wobei der Schritt (a) ausgeführt wird durch das Einbringen einer flüssigen wässrigen Lösung von Natriumacetat bei einer Konzentration zwischen 4 und 60 molal in eine Form mit der gewünschten Abmessung und das Festwerdenlassen der Lösung.

3. Verfahren nach Anspruch 1 oder 2, wobei der geschmolzene Werkstoff ausgewählt ist aus einem Metall, einer Keramik, einem Gummi, einem Thermoplast und einem Gemisch derselben.

4. Verfahren nach Anspruch 3, wobei der geschmolzene Werkstoff ausgewählt ist aus Thermoplasten und Gummis.

5. Verfahren nach Anspruch 4, wobei der geschmolzene Werkstoff ausgewählt ist aus Thermoplasten.

6. Verfahren nach einem der vorhergehenden Ansprüche, wobei der Schritt (b) durch Spritzgießen ausgeführt wird.

7. Verfahren nach einem der vorhergehenden Ansprüche, das, vor dem Schritt (a), einen weiteren Schritt umfasst:
das Bereitstellen einer Einrichtung und/oder Struktur, die in dem Hohlraum des hohlen Artikels eingeschlossen werden soll, innerhalb des schmelzbaren festen Kernwerkstoffs.

8. Verfahren nach einem der vorhergehenden Ansprüche, wobei der schmelzbare feste Kern mit einem oder mehreren Einsätzen versehen ist, die es ermöglichen, dass der Kern in einer gewünschten Position in einer Form angeordnet wird.

9. Verfahren nach einem der vorhergehenden Ansprüche, wobei der Schritt (d) durch das Schmelzen des schmelzbaren festen Kerns ausgeführt wird.

10. Verfahren nach einem der Ansprüche 1 bis 8, wobei der Schritt (d) durch das Auflösen des schmelzbaren festen Kerns mit einem Lösungsmittel ausgeführt wird.

11. Verfahren nach einem der vorhergehenden Ansprüche, wobei der hohle Artikel eine Leitung, ein Luftansaugverteiler, ein Filter, ein Resonator, eine Mischeinrichtung oder ein Schalldämpfergehäuse ist.

12. Verfahren nach Anspruch 1, wobei der hohle Artikel ein Polymer-Schalldämpfergehäuse ist und wobei das Verfahren die folgenden Schritte umfasst:
(i) das Bereitstellen einer ersten Form, die einen Hohlraum hat, der die inneren Umrisse des Polymer-Schalldämpfergehäuses definiert,
(ii) das Bereitstellen eines Einsatzes und das Anordnen desselben in der ersten Form, so dass er sich bis zu dem Äußeren der ersten Form erstreckt,
(iii) das Füllen der ersten Form mit einer flüssigen wässrigen Lösung von Natriumacetat, die eine Konzentration zwischen 4 und 60 molal hat, und das Festwerdenlassen der Lösung, um einen schmelzbaren festen Kern zu formen,
(iv) das Entformen des schmelzbaren festen Kerns,
(v) das Bereitstellen einer zweiten Form, die einen Formhohlraum hat, der die äußere Oberflächenkonfiguration des Polymer-Schalldämpfergehäuses definiert,
(vi) das Anordnen des schmelzbaren Kerns in der zweiten Form,
(vii) das Umhüllen des schmelzbaren festen Kerns mit einem geschmolzenen Polymer-Werkstoff, um das Polymer-Schalldämpfergehäuse zu formen,
(viii) das Ausstoßen des Polymer-Schalldämpfergehäuses,
(ix) das Verflüssigen des schmelzbaren festen Kerns, um einen Kernwerkstoff zu haben, der sich in einem flüssigen Zustand befindet, und
(x) das Entfernen des schmelzbaren Kerns.

13. Verfahren nach Anspruch 12, wobei der in dem Schritt (ii) verwendete Einsatz ein Auspuffrohr ist.

14. Verfahren nach Anspruch 12 oder 13, wobei der in dem Schritt (ii) verwendete Einsatz ein Auspuffrohr ist und wobei das Verfahren, vor dem Schritt (iii), einen weiteren Schritt, das Bereitstellen von Buchsen an dem Auspuffrohr, umfasst.

15. Verfahren nach einem der Ansprüche 12 bis 14, wobei der geschmolzene Polymer-Werkstoff ausgewählt ist aus Thermoplasten und Gummis.

16. Verfahren nach Anspruch 15, wobei der geschmolzene Polymer-Werkstoff ausgewählt ist aus Thermoplasten.

## Revendications

1. Procédé de production d'un article creux comportant une cavité interne, comprenant les étapes ci-dessous :
(a) fourniture d'un noyau solide fusible composé d'un matériau de noyau et ayant la taille et la forme voulues de la cavité interne de l'article creux ;
(b) enveloppement du noyau solide fusible d'un matériau fondu, ce matériau fondu étant solide à température ambiante ;
(c) solidification du matériau fondu ;
(d) liquéfaction du noyau solide fusible pour produire un matériau de noyau se trouvant dans un état liquide ; et
(e) retrait du matériau de noyau ;
dans lequel le noyau solide fusible est constitué par une solution aqueuse solidifiée d'acétate de sodium, ayant une concentration comprise entre 4 et 60 moles.

2. Procédé selon la revendication 1, dans lequel l'étape (a) est exécutée en plaçant une solution aqueuse liquide d'acétate de sodium, ayant une concentration comprise entre 4 et 60 moles, dans un moule ayant une taille voulue ; et en solidifiant la solution.

3. Procédé selon les revendications 1 ou 2, dans lequel le matériau fondu est sélectionné parmi un métal, une céramique, un caoutchouc, un thermoplastique et un mélange de ces matériaux.

4. Procédé selon la revendication 3, dans lequel le matériau fondu est sélectionné parmi des thermoplastiques et des caoutchoucs.

5. Procédé selon la revendication 4, dans lequel le matériau fondu est sélectionné parmi des thermoplastiques.

6. Procédé selon l'une quelconque des revendications précédentes, dans lequel l'étape (b) est exécutée par moulage par injection.

7. Procédé selon l'une quelconque des revendications précédentes, comprenant une étape additionnelle, exécutée avant l'étape (b), comprenant
l'agencement, dans le matériau de noyau solide fusible, d'un dispositif et/ou d'une structure destiné à être renfermé dans la cavité de l'article creux.

8. Procédé selon l'une quelconque des revendications précédentes, dans lequel le noyau solide fusible est pourvu d'un ou de plusieurs inserts, permettant le positionnement du noyau dans une position voulue dans un moule.

9. Procédé selon l'une quelconque des revendications précédentes, dans lequel l'étape (d) est exécutée par fusion du noyau solide fusible.

10. Procédé selon l'une quelconque des revendications 1 à 8, dans lequel l'étape (d) est exécutée par dissolution du noyau solide fusible avec un solvant.

11. Procédé selon l'une quelconque des revendications précédentes, dans lequel l'article creux est une conduite, un collecteur d'admission d'air, un filtre, un résonateur, un dispositif de mélange ou un carter de silencieux.

12. Procédé selon la revendication 1, dans lequel l'article creux est un carter de silencieux polymère, le procédé comprenant les étapes ci-dessous :
(i) fourniture d'un premier moule, comportant une cavité définissant les contours internes du carter du silencieux polymère ;
(ii) fourniture d'un insert et positionnement de celui-ci dans un premier moule, de sorte qu'il s'étende vers l'extérieur du premier moule ;
(iii) remplissage du premier moule d'une solution aqueuse de sodium ayant une concentration comprise entre 4 et 60 moles ; et solidification de la solution aqueuse pour former un noyau solide fusible ;
(iv) démoulage du noyau solide fusible ;
(v) fourniture d'un deuxième moule, comportant une cavité de moule définissant la configuration de la surface externe du carter du silencieux polymère :
(vi) positionnement du noyau fusible dans le deuxième moule ;
(vii) enveloppement du noyau solide fusible d'un matériau polymère fondu pour former le carter du silencieux polymère ;
(viii) éjection du carter du silencieux polymère ;
(ix) liquéfaction du noyau solide fusible pour produire un matériau de noyau se trouvant dans un état liquide ; et
(x) retrait du noyau fusible.

13. Procédé selon la revendication 12, dans lequel l'insert utilisé lors de l'étape (ii) est un tuyau d'échappement.

14. Procédé selon les revendications 12 ou 13, dans lequel l'insert utilisé lors de l'étape (ii) est un tuyau d'échappement, le procédé comprenant une étape additionnelle, exécutée avant l'étape (iii), comprenant l'agencement de douilles sur le tuyau d'échappement.

15. Procédé selon l'une quelconque des revendications 12 à 14, dans lequel le matériau polymère fondu est sélectionné parmi des thermoplastiques et des caoutchoucs.

16. Procédé selon la revendication 15, dans lequel le matériau polymère fondu est sélectionné parmi des thermoplastiques.
